# EUROPEAN PATENT SPECIFICATION

(11) **EP 3 825 828 B1**
(45) Date of publication and mention of the grant of the patent: **04.06.2025**
(21) Application number: 20171509.1
(22) Date of filing: 27.04.2020
(51) Int. Cl.: G06F 3/048, G06F 3/0481, G06F 3/0482, G06F 3/0484, G06F 3/0488

(54) **METHOD AND DEVICE FOR DISPLAY AT INTERFACE OF MULTIMEDIA INFORMATION APPLICATION, UE, COMPUTER PROGRAM, AND MEDIUM**
VERFAHREN UND VORRICHTUNG ZUR ANZEIGE AN SCHNITTSTELLE EINER MULTIMEDIA-INFORMATIONSANWENDUNG, BENUTZERGERÄT, COMPUTERPROGRAMM UND MEDIUM
PROCÉDÉ ET DISPOSITIF D'AFFICHAGE À L'INTERFACE D'UNE APPLICATION D'INFORMATION MULTIMEDIA, D'UNE INTERFACE UTILISATEUR, D'UN PROGRAMME INFORMATIQUE ET D'UN SUPPORT

(30) Priority: 20.11.2019 CN 201911143346
(43) Date of publication of application: 26.05.2021
(73) Proprietor: Beijing Xiaomi Mobile Software Co., Ltd., Beijing 100085 (CN)
(72) Inventor: LIU, Xushu, Beijing, Beijing 100085 (CN)
(74) Representative: dompatent von Kreisler Selting Werner - Partnerschaft von Patent- und Rechtsanwälten mbB

(56) References cited:
- ANONYMOUS: "Documentation:VLC for dummies - VideoLAN Wiki", 23 March 2019 (2019-03-23), XP055736696, Retrieved from the Internet <URL:https://wiki.videolan.org/index.php?title=Documentation:VLC_for_dummies&oldid=60123> [retrieved on 20201005]
- ANONYMOUS: "Documentation:Video and Audio Filters - VideoLAN Wiki", 22 March 2019 (2019-03-22), XP055736699, Retrieved from the Internet <URL:https://wiki.videolan.org/index.php?title=Documentation:Video_and_Audio_Filters&oldid=61094> [retrieved on 20201005]
- ANONYMOUS: "SongSubtitles.org - VideoLAN Wiki", 30 March 2019 (2019-03-30), XP055737429, Retrieved from the Internet <URL:https://wiki.videolan.org/index.php?title=SongSubtitles.org&oldid=60437> [retrieved on 20201007]

## Description

### TECHNICAL FIELD

The subject disclosure relates to the field of electronic equipment, and more particularly, to a method for display at an interface of a multimedia information application, User Equipment (UE), a computer program, and a storage medium.

### BACKGROUND

An increasing number of users are watching programs using smart UE. When a video and / or audio program is played at smart UE, controls such as information on a current program, pause, channel switch, volume regulation, fast forwarding, rewind, etc., may generally be arranged on a User Interface (UI), impacting display of content that is being played, leading to poor user experience.

"Documentation: VLC for dummies - VideoLAN Wiki", retrieved from https://wiki.videolan.org/index.php?title=Oocumentation:VLC_for_dummies*&*oldid=60123, discloses a VLC media player.

### SUMMARY

Embodiments herein provide a method for display at an interface of a multimedia information application, User Equipment (UE), a computer program, and a storage medium.

The features of the method and device according to the subject disclosure are defined in the independent claims, and the preferable features according to the subject invention are defined in the dependent claims.

According to an aspect herein, a method for display at an interface of a multimedia information application includes:
in response to detecting a first operation on a first control on an interface of a multimedia information application, displaying a second control on the interface; and
in response to detecting a hiding trigger event, hiding the second control on the interface.

With embodiments herein, a first control is displayed on an interface of a multimedia information application. A second control is displayed based on detection of a first operation on the first control. Accordingly, hiding of the second control saves a region for displaying the second control on the interface. Accordingly, a greater region on the interface may be available for displaying other information content. In addition, interference of the second control to other information is reduced. When display of the second control on the interface is triggered based on the first operation, the multimedia information application may be controlled, based on the second control, to execute a predetermined function configured for the second control, thereby ensuring diversity of functions of the multimedia information application. Therefore, with embodiments herein, switch between hiding and display of a second control is performed, improving user experience.

The interface includes a playing page where multimedia information is played. A first region of the playing page may be adapted to displaying text content. The text content may be associated with multimedia information being played. The text content may be subject to dynamic switch.

The displaying the second control on the interface may include: displaying the second control in a second region of the playing page.

The second region may be a region on the playing page other than the first region. The second region may be part of the first region.

The playing page may be an audio playing page.

The first region may be a middle region of the playing page.

The second region may be a corner region of the playing page. The corner region may be located outside the middle region.

The interface includes a navigation page. The navigation page may include a display region and a toolbar. At least one or more identifiers that identify multimedia information may be displayed in the display region. The toolbar may be located at a bottom of the display region. The first control may be located at a predetermined location on the toolbar.

The displaying the second control on the interface may include:
displaying at least one second control in the display region around the predetermined location.

The method further includes
while multimedia information is being played, dynamically adjusting a parameter for displaying the first control according to a circumstance of playing the multimedia information.

The circumstance of playing the multimedia information may include at least one of:
a progress in playing the multimedia information being played,
a tone of an audio being played, or
a circumstance of switching between distinct multimedia information.

The parameter may include at least one of:
a color in which the first control is displayed,
a brightness with which the first control is displayed,
a form in which the first control is displayed, or
an area over which the first control is displayed.

The in response to detecting the hiding trigger event, hiding the second control on the interface may include:
in response to detecting that the second control has been displayed for longer than a preset duration threshold, hiding the second control on the interface;
in response to detecting a second operation on the first control, hiding the second control on the interface; and
in response to detecting that an operation on the second control completes, hiding the second control on the interface.

The in response to detecting that the operation on the second control completes, hiding the second control on the interface may include:
in response to detecting a third operation on at least one second control, hiding the second control on the interface.

According to an aspect herein, a device for display at an interface of a multimedia information application includes a display module and a hiding module.

The display module is adapted to, in response to detecting a first operation on a first control on an interface of a multimedia information application, displaying a second control on the interface.

The hiding module is adapted to, in response to detecting a hiding trigger event, hiding the second control on the interface.

The advantages and technical effects of the device herein correspond to those of the method presented above.

The interface may include a playing page where multimedia information is played. A first region of the playing page may be adapted to displaying text content. The text content may be associated with multimedia information being played. The text content may be subject to dynamic switch.

The display module may be adapted to displaying the second control in a second region of the playing page. The second region may be a region on the playing page other than the first region. The second region may be part of the first region.

The playing page may be an audio playing page.

The first region may be a middle region of the playing page.

The second region may be a corner region of the playing page. The corner region may be located outside the middle region.

The interface may include a navigation page. The navigation page may include a display region and a toolbar. At least one or more identifiers that identify multimedia information may be displayed in the display region. The toolbar may be located at a bottom of the display region. The first control may be located at a predetermined location on the toolbar.

The display module may be adapted to displaying at least one second control in the display region around the predetermined location.

The device may further include an adjusting module.

The adjusting module may be adapted to, while multimedia information is being played, dynamically adjusting a parameter for displaying the first control according to a circumstance of playing the multimedia information.

The circumstance of playing the multimedia information may include at least one of:
a progress in playing the multimedia information being played,
a tone of an audio being played, or
a circumstance of switching between distinct multimedia information,

The parameter may include at least one of:
a color in which the first control is displayed,
a brightness with which the first control is displayed,
a form in which the first control is displayed, or
an area over which the first control is displayed.

The hiding module may be adapted to, in response to detecting that the second control has been displayed for longer than a preset duration threshold, hiding the second control on the interface; in response to detecting a second operation on the first control, hiding the second control on the interface; and in response to detecting that an operation on the second control completes, hiding the second control on the interface.

The hiding module may be adapted to, in response to detecting a third operation on at least one second control, hiding the second control on the interface.

According to an aspect herein, User Equipment (UE) includes a processor and memory.

The memory is adapted to storing an instruction executable by the processor.

The processor is adapted to executing the method according to the first aspect.

The advantages and technical effects of the UE herein correspond to those of the method presented above.

In one particular embodiment, the method is determined by computer program instructions.

Consequently, according to an aspect herein, the subject disclosure is further directed to a computer program comprising instructions for executing the method according to an embodiment herein, when said program is executed by a computer.

This program can use any programming language and take the form of source code, object code or a code intermediate between source code and object code, such as a partially compiled form, or any other desirable form.

According to an aspect herein, a medium has stored thereon instructions which, when executed by a processor of User Equipment (UE), allow the UE to execute the method herein.

The medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the medium can be an integrated circuit in which the program is incorporated, the circuit being adapted to execute the method in question or to be used in its execution.

The above general description and detailed description below are but exemplary and explanatory, and do not limit the subject disclosure.

### BRIEF DESCRIPTION OF THE ACCOMPANYING DRAWINGS

Drawings here are incorporated in and constitute part of the subject disclosure, illustrate embodiments according to the subject disclosure, and together with the subject disclosure, serve to explain the principle of the subject disclosure.
FIG. 1 is a flowchart of a method for display at an interface of a multimedia information application according to an embodiment herein.
FIG. 2 is a diagram of display in a navigation page in a song playing application according to an embodiment herein.
FIG. 3 is a diagram of display in a navigation page in a song playing application according to an embodiment herein.
FIG. 4 is a diagram of display in a navigation page in a song playing application in related art.
FIG. 5 is a diagram of display in a playing page in a song playing application according to an embodiment herein.
FIG. 6 is a diagram of display in a playing page in a song playing application in related art.
FIG. 7 is a diagram of displaying a first control on a navigation page in a song playing application according to an embodiment herein.
FIG. 8 is a diagram of displaying a first control on a navigation page in a song playing application according to an embodiment herein.
FIG. 9 is a diagram of displaying a first control on a playing page in a song playing application according to an embodiment herein.
FIG. 10 is a diagram of displaying a first control on a playing page in a song playing application according to an embodiment herein.
FIG. 11 is a diagram of a device for display at an interface of a multimedia information application according to an exemplary embodiment.
FIG. 12 is a block diagram of UE according to an embodiment herein.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the subject disclosure. Rather, they are mere examples of the device and method in accordance with certain aspects of the subject disclosure as recited in the accompanying claims. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and method in accordance with certain aspects herein as recited in the accompanying claims.

A term used in an embodiment herein is merely for describing the embodiment instead of limiting the subject disclosure. A singular form "a" and "the" used in an embodiment herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc., may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

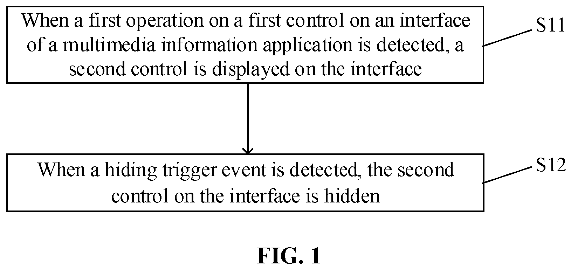

FIG. 1 is a flowchart of a method for display at an interface of a multimedia information application according to an embodiment herein. As shown in FIG. 1, the method for display at an interface of a multimedia information application may apply to UE. The method includes a step as follows.

In S11, a first operation on a first control on an interface of a multimedia information application is detected. A second control is displayed on the interface.

In S12, a hiding trigger event is detected. Then, the second control on the interface is hidden.

According to an embodiment herein, UE may include mobile UE, fixed UE, etc. Mobile UE may include a mobile phone, a tablet computer, wearable equipment, etc. Fixed UE may include, but is not limited to, a Personal Computer (PC). UE may include a display. The display may also serve as a touch screen capable of receiving a touch operation of a user of the UE.

According to an embodiment herein, a multimedia information application (app) may include a song playing application, a video playing application, an image browsing application, etc. When a multimedia information application is started and run at a front end, an interface of the multimedia information application may be displayed on a display of UE. A first control may be displayed on the interface.

According to an embodiment herein, the interface includes at least a navigation page and a playing page. Multimedia information is played in the playing page. For example, the multimedia information application may be a song playing application. Then, the navigation page may be a home page of a music application. The navigation page may serve to display navigation information such as a recommended singer, a recommended genre, etc. The playing page may include a page for displaying a cover image of a figure of a songwriter. The playing page may include a page for displaying information on lyrics, etc.

Note that according to an embodiment herein, a user of UE may control a multimedia information application to execute the same function or to execute distinct functions, based on an operation on a first control displayed on distinct interfaces.

For example, a second control is displayed on a navigation page based on a first operation by a user of UE on the navigation page. A second control may be displayed on a playing page based on a first operation by a user of UE on the playing page. A first operation includes an operation with a pressing strength greater than a preset strength threshold and /or a pressing duration longer than a preset duration.

According to an embodiment herein, in response to an operation with a pressing strength less than the preset strength threshold and /or a pressing duration shorter than the preset duration, a multimedia information application may execute a distinct function respectively on a distinct interface.

On the navigation page, in response to an operation on the first control with a pressing strength less than the preset strength threshold and /or a pressing duration shorter than the preset duration, the multimedia information application plays the multimedia information. On the playing page where the multimedia information is played, in response to the operation on the first control with the pressing strength less than the preset strength threshold and /or the pressing duration shorter than the preset duration, the multimedia information application switches content displayed on the playing page, such as from a page for displaying a cover image of a figure to a page for displaying information on lyrics. Content displayed on a page for displaying a cover image of a figure may include an image of a figure related to multimedia information being played, such as a photo of a singer, a photo of a cover of an album, etc.

Note that according to an embodiment herein, the first control may be located at a distinct location on the interface corresponding to distinct content of the interface. For example, the first control may be located in the middle on the navigation page. The first control may be located at a corner on the playing page.

Understandably the navigation page may generally be a sliding page. The navigation page may not be a focus of attention of a user of UE. Therefore, the first control being located in the middle will have no impact on information displayed on the navigation page. However, information displayed on the playing page, such as information on lyrics, may be a focus of interest of a user. Therefore, arranging the first control at a corner on the playing page may reduce impact of the first control on information display, as well as reducing impact of the second control on information display when the second control is displayed based on the first control.

According to an embodiment herein, UE may display the second control on the interface based on the first operation of a user of the UE on the first control. The second control may serve a function distinct from that of the first control. The second control may be adapted to controlling multimedia information that is being played. The second control may include at least one as follows.

A pause control may be adapted to pausing play of multimedia information that is being played.

A bookmarking control may be adapted to bookmarking multimedia information that is being played.

A switch control may be adapted to performing multimedia information switch, such as from playing first multimedia information being played to playing second multimedia information.

A volume control may be adapted to controlling a volume of multimedia information that is being played.

According to an embodiment, there are multiple second controls, and the multiple second controls are displayed separately on the interface.

According to an embodiment, compared to a control panel with pop-ups that includes multiple controls, multiple second controls are displayed separately on the interface directly, reducing accidental touches by a user of UE.

According to an embodiment herein, since both the first control and the second control serve a user of UE to control the multimedia information application, it is arranged that the first control and the second controls are separated from each other by a distance less than a distance threshold, with a relation between locations of two controls being fixed with respect to each other. Accordingly, the user may conveniently touch the second control with no significant change in a location of touch. Of course, the distance between the first control and the second control and the relation between the locations of the two controls are not limited by embodiments herein.

According to an embodiment herein, not only that the first control may be located on the interface at a distinct location corresponding to distinct content of the interface, but that the second control may also be located on the interface at a distinct location corresponding to distinct content of the interface.

According to an embodiment, the interface includes a navigation page. The navigation page may include a display region and a toolbar. At least one or more identifiers that identify multimedia information may be displayed in the display region. The toolbar may be located at a bottom of the display region. The first control may be located at a predetermined location on the toolbar. In S11, the second control may be displayed on the interface as follows.

At least one second control may be displayed in the display region around the predetermined location.

According to some embodiments, the display region may further include information on a poster of the multimedia information. The information on the poster and /or the identifier of the multimedia information may serve as a link for triggering play of the multimedia information. The identifier of the multimedia information may include at least a name of the multimedia information, such as a name of a song, a name of a video, etc.

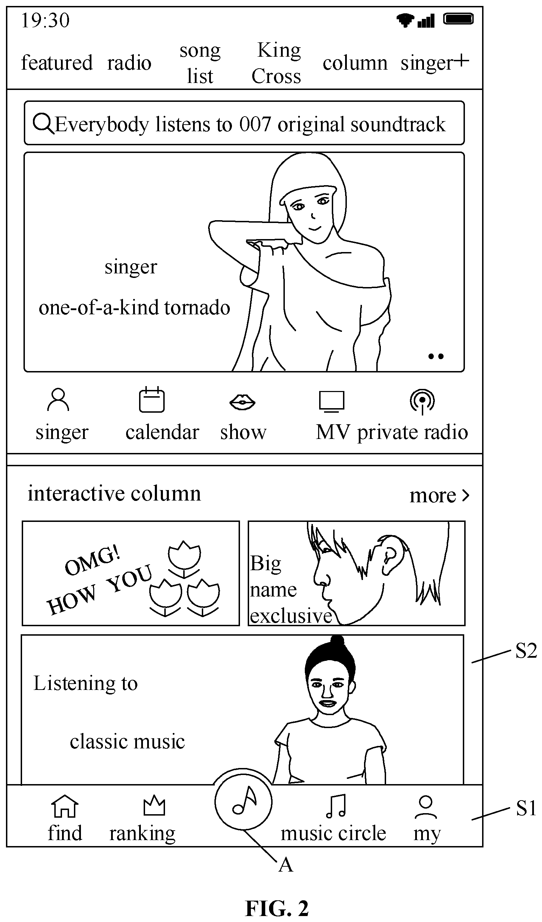

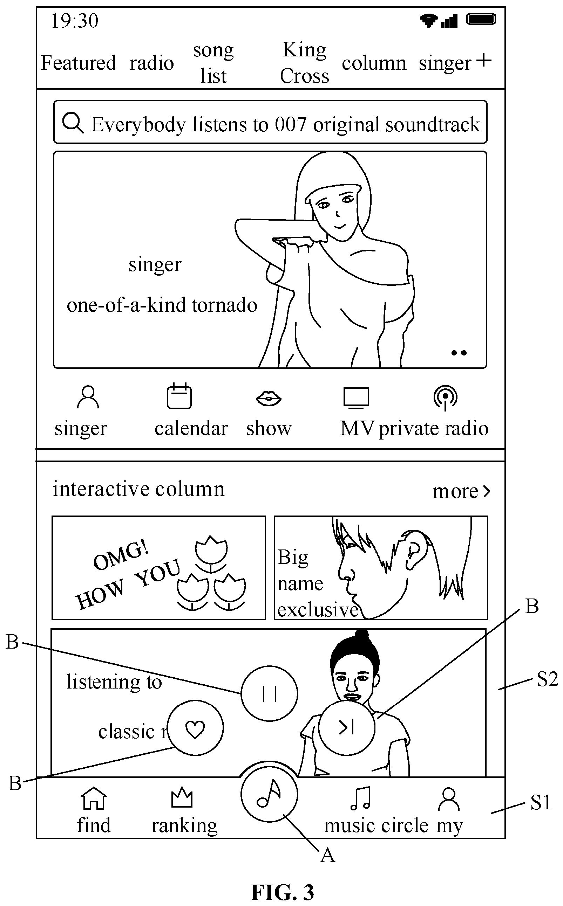

FIG. 2 is a diagram of display in a navigation page in a song playing application according to an embodiment herein. As shown in FIG. 2, a region shown by S1 may be the toolbar. A region shown by S2 may be the display region. A in the middle of the region S1 may denote the first control. FIG. 3 is a diagram of display in a navigation page in a song playing application according to an embodiment herein. Based on the first operation of a user of the UE on the first control in the middle of the region S1, at least one second control may be displayed in the display region around the first control in the middle. In FIG. 3, B may identify a second control. There may be three second controls on the display interface, i.e., a pause control for pausing play of a song, a bookmarking control for bookmarking a song, and a switch control for song switch.

The second control is displayed around the first control, facilitating touch. In addition, with surrounding deployment, as many second controls as possible may be displayed. Further, rather than being displayed on the toolbar, a second control may be displayed in the display region, thereby reducing blocking of another control fixedly displayed on the toolbar. A control displayed on the toolbar may be touched more frequently, such as than the second type control, for example.

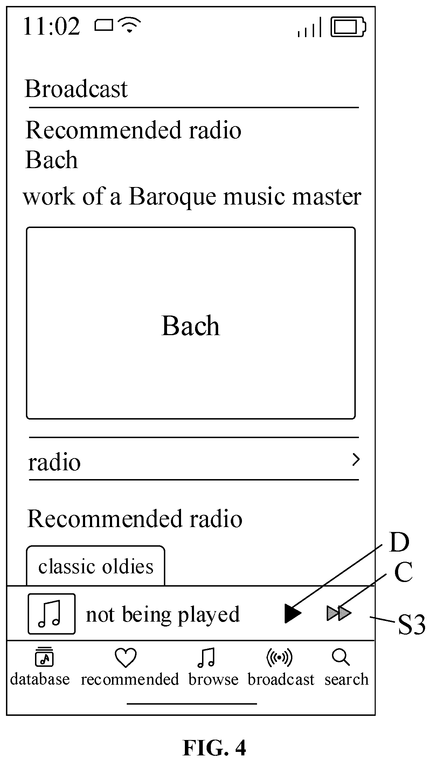

FIG. 4 is a diagram of display in a navigation page in a song playing application in related art. As shown in FIG. 4, a region S3 may be a control panel for controlling play of a song. The control panel may cover content displayed in the navigation page. The control panel may include two controls, i.e., a control C and a control D. Any control adapted to controlling play of a song may be displayed on the navigation page.

Understandably by comparing FIG. 3 and FIG. 4, with embodiments herein, a second control is hidden, allowing UE to display, before a user of the UE, more information displayed on the interface.

According to an embodiment, the interface may include a playing page. Multimedia information may be played in the playing page. A first region of the playing page may be adapted to displaying text content. The text content may be associated with multimedia information that is being played. The text content may be subject to dynamic switch. In S11, the second control may be displayed on the interface as follows.

The second control may be displayed in a second region of the playing page. The second region may be a region on the playing page other than the first region. The second region may be part of the first region.

According to an embodiment, the first region may differ from the second region. The second region may also be part of the first region. Understandably, when the second region differs from the first region, the second control in the second region will have no impact on the text content that is associated with the multimedia information being played and that is subject to dynamic switch. In case the second region is part of the first region, as the second control is a displayable hidable floating control, a hidden second control may have no impact on display of text content in the first region. Note that locations of the first region and the second region on the playing page are not limited by embodiments herein.

According to an embodiment, the playing page may be an audio playing page. The first region may be a middle region of the playing page. The second region may be a corner region of the playing page. The corner region may be located outside the middle region.

According to an embodiment, since the second region is a corner region outside the middle region, text content displayed in the first region will not be covered by the second region. Since the first region is adapted to displaying text content that is associated with the multimedia information being played and that is subject to dynamic switch, arranging the first region in the middle region may facilitate view by a user of UE. The second region may be adapted to displaying the second control. The user of the UE may seldom operate the second control. Accordingly, arranging the second region in the corner region may improve experience of the user of the UE.

According to an embodiment, text content may include an item as follows.

Text content may include lyrics of a song displayed by being scrolled.

Text content may include subtitles of broadcast displayed by being scrolled.

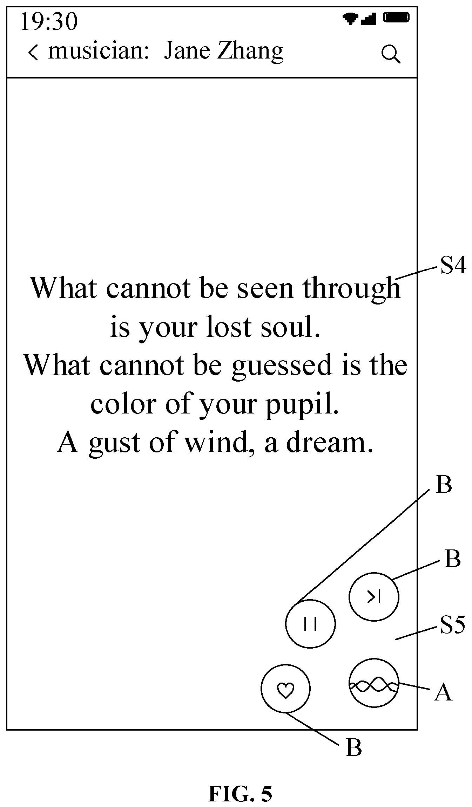

FIG. 5 is a diagram of display in a playing page in a song playing application according to an embodiment herein. As shown in FIG. 5, on a playing page for playing a song, S4 may denote the first region located in a middle region of the playing page. Lyrics associated with the song may be displayed in the region. S5 may denote the second region. The second region may be located in a corner region to the right in the playing page. Three second controls B may be displayed in the second region. As described above, according to an embodiment herein, the location of the first control may differ depending on content of the interface. The location of the first control with respect to the location of the second control may be fixed. In FIG. 5, the first control A may also be located in the second region. The three second controls B may be displayed in the corner region around the first control A. A distance between a respective second control and the first control may be the same as the distance between the second control and the first control in FIG. 3.

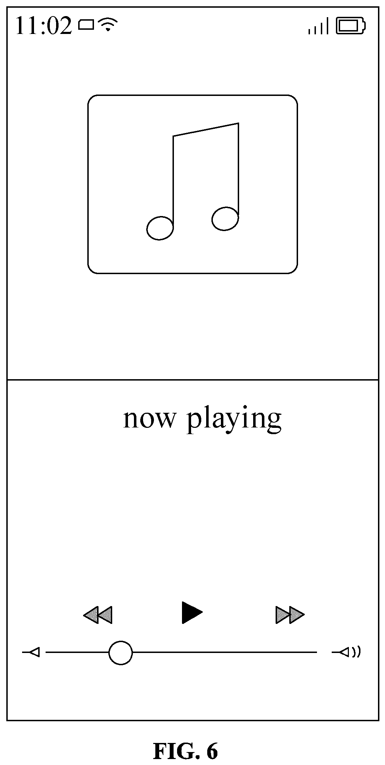

FIG. 6 is a diagram of display in a playing page in a song playing application in related art. As shown in FIG. 6, after a jump from the navigation page in FIG. 4 to a playing page, a height of the control panel may increase. A region in the playing page where multimedia information may be displayed may decrease.

Understandably, according to an embodiment herein, since a user of UE may focus on content associated with multimedia information on a playing page, such as text content displayed dynamically, the first control and the second control may be arranged in a second region having no impact on the first region of the playing page, improving experience of the user of the UE.

Note that a relationship between locations of the first control or the second control illustrated in embodiments herein is but exemplary. The location of the first control or the second control is not limited by embodiments herein. Moreover, the location where the first control or the second control is displayed may also be adjusted based on an operation of a user of UE. For example, a user of UE may adapt any of second controls displayed separately to a habit of the user.

According to an embodiment, a parameter for displaying the first control may differ depending on an interface of an app. For example, in the navigation page shown in FIG. 2 and FIG. 3, the first control may be displayed in form of a musical note. In the playing page shown in FIG. 5, the first control may be displayed in form of a wave.

Moreover, according to an embodiment, while multimedia information is being played, a parameter for displaying the first control may be adjusted dynamically according to a circumstance of playing the multimedia information. The circumstance of playing the multimedia information may include at least one of: a progress in playing the multimedia information being played, a tone of an audio being played, a circumstance of switching between distinct multimedia information, etc. The parameter may include at least one of: a color in which the first control is displayed, a brightness with which the first control is displayed, a form in which the first control is displayed, an area over which the first control is displayed, etc.

A parameter for displaying the first control may be changed, thereby changing a result of displaying the first control. Accordingly, a result of displaying the first control may be changed to display different circumstances of play before a user without adding content to be displayed or occupying an additional area for display.

As shown in FIG. 5, a first control may be displayed in form of a wave, changing dynamically according to a tone of a song. According to an embodiment herein, the first control may also be displayed dynamically according to a progress in playing multimedia information. For example, the first control may be displayed dynamically in form of a progress bar. Alternatively, an area over which the first control is displayed, a brightness with which the first control is displayed, etc., may be adjusted dynamically according to a current tone, a progress in playing the multimedia information, etc.

Note that according to an embodiment herein, switch between distinct multimedia information may include automatic multimedia information switch, a switching operation executed by a user of UE based on a switch control, etc. A switch control may be a second control according to an embodiment herein. Again referring to a song playing application as an example, UE may be playing a song E based on the app. After play of the song E completes, the song playing app may automatically switch to a song F, such that the UE may continue to play. Alternatively, a user of the UE may switch to the song F through a switch control while the song E is still being played.

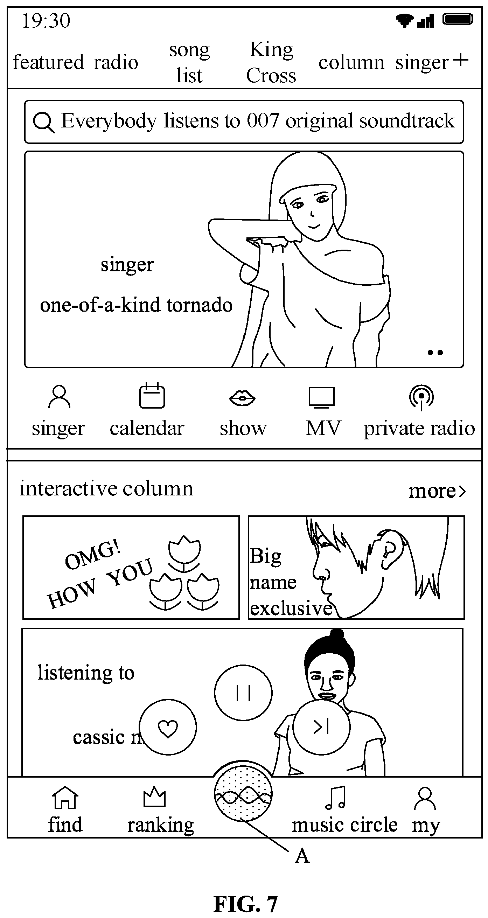

FIG. 7 is a diagram of displaying a first control on a navigation page in a song playing application according to an embodiment herein. As shown in FIG. 7, an interface of the app of the UE may be a navigation page. However, the song playing application may be in a song playing state. A first control A may be displayed in form of a wave. The first control A may be displayed in a first color.

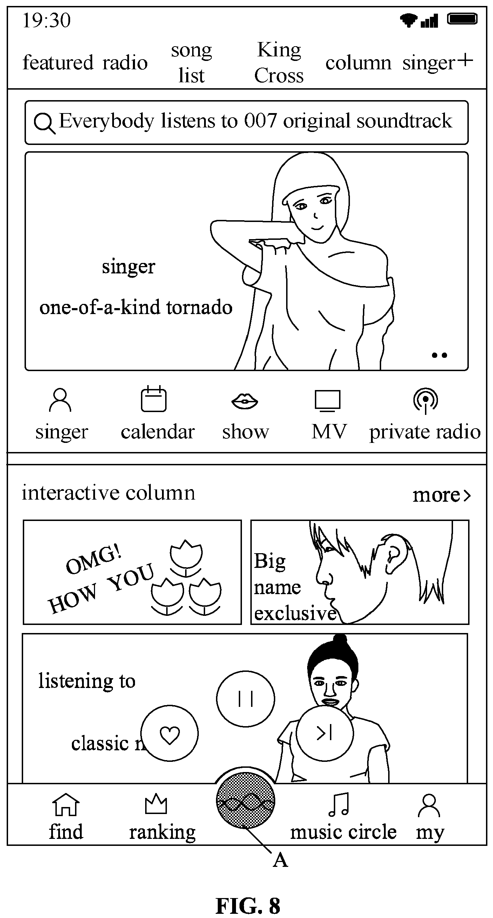

FIG. 8 is a diagram of displaying a first control on a navigation page in a song playing application according to an embodiment herein. Upon a song switch such as an automatic song switch or a switch controlled by a user of UE based on a switch control, as shown in FIG. 8, a first control A may be displayed in form of a wave. The first control A may be displayed in a second color.

In FIG. 7 and FIG. 8, the first control may adjust the color in which the first control is displayed according to the circumstance of switching between multimedia information. According to an embodiment, the color in which the first control is displayed may be adjusted randomly. According to an embodiment, the color in which the first control is displayed may be adjusted according to a color of a background of the playing page.

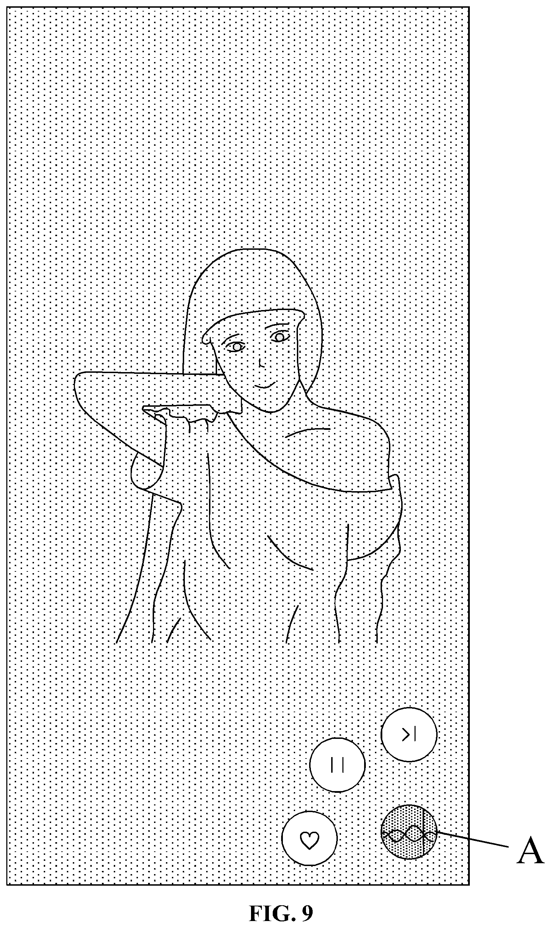

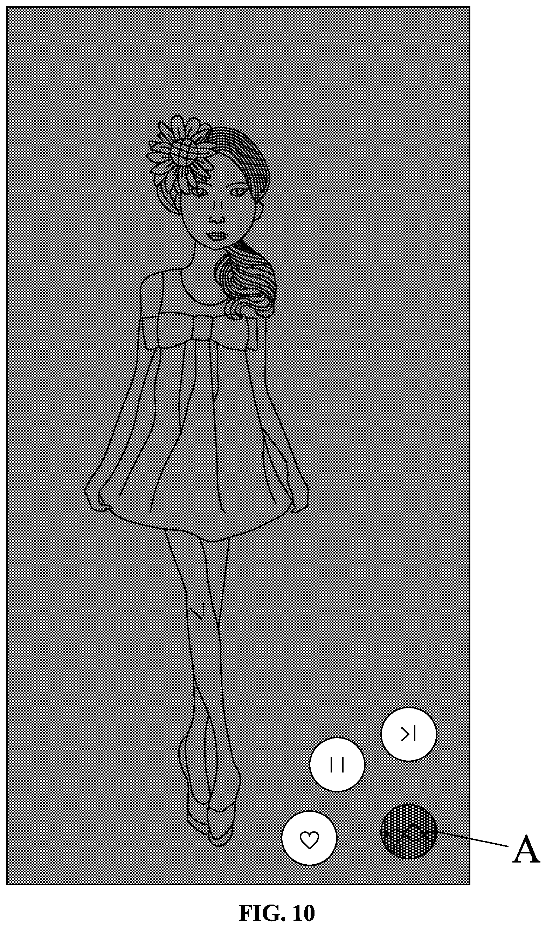

FIG. 9 is a diagram of displaying a first control on a playing page in a song playing application according to an embodiment herein. FIG. 10 is a diagram of displaying a first control on a playing page in a song playing application according to an embodiment herein. As shown in FIG. 9 and FIG. 10, a cover image of a distinct figure corresponding to a distinct song may be displayed on the playing page. A background of a cover image of a distinct figure may be of a distinct color. In FIG. 9, UE may control to display a first control A in a third color according to a first color of a background. When the color of the background changes based on an automatic song switch, in FIG. 10, the UE may control to display the first control A in a fourth color according to a second color of the background.

According to an embodiment, while multimedia information is being played, a parameter for displaying the first control may be adjusted dynamically according to a circumstance of playing the multimedia information. Understandably, by dynamically adjusting a parameter for display, a user may be signaled of a progress in display, a switch state, etc., thereby improving user experience. Adapting the color in which the first control is displayed to the color of the background further improves user experience.

According to an embodiment, S12 may include an option as follows.

When it is detected that the second control has been displayed for longer than a preset duration threshold, the second control on the interface may be hidden.

When a second operation on the first control is detected, the second control on the interface may be hidden.

When it is detected that an operation on the second control completes, the second control on the interface may be hidden.

According to an embodiment herein, after a second control has been displayed, the second control may be hidden based on a distinct trigger event. For example, when it is detected that the second control has been displayed for longer than a preset duration threshold, the second control may be hidden. For example, after the second control has been displayed, a second press on the first control may trigger hiding of the second control. The press operation may be the second operation. Another example of a trigger event may be detection of completion of an operation of a user of UE on a switch control.

According to an embodiment, when it is detected that the operation on the second control completes, the second control on the interface may be hidden as follows.

When a third operation on at least one second control is detected, the second control on the interface may be hidden.

According to an embodiment, an operation on a second control may be referred to as a third operation. Having displayed a second control based on a first operation with a pressing duration longer than a preset duration, UE may receive a third operation of a user of the UE on the second control. If the UE detects a third operation on at least one second control, the UE may hide the second control on the interface.

According to an embodiment, having displayed a second control based on a first operation with a pressing duration longer than a preset duration, if a user of UE ends the first operation and performs no further operation through a touch screen, the second control may be hidden. If UE detects a first operation, a third operation, and a fourth operation connecting the first operation and the third operation, the first operation, the third operation, and the fourth operation may be a continuous operation performed by a user at once. When the continuous operation ends, a second control on the interface may be hidden.

In S12 according to an embodiment herein, a second control is hidden based on a detected hiding trigger event that triggers hiding the second control, allowing more content displayed on the interface to be displayed before a user of UE, improving user experience.

With embodiments herein, a first control is displayed on an interface of a multimedia information application. A second control is displayed based on detection of a first operation on the first control. Accordingly, hiding of the second control saves a region for displaying the second control on the interface. Accordingly, a greater region on the interface may be available for displaying other information content. In addition, interference of the second control to other information is reduced. When display of the second control on the interface is triggered based on the first operation, the multimedia information application may be controlled, based on the second control, to execute a predetermined function configured for the second control, thereby ensuring diversity of functions of the multimedia information application. Therefore, with embodiments herein, switch between hiding and display of a second control is performed, improving user experience.

A device for display at an interface of a multimedia information application may apply to User Equipment (UE). The device may include a processor and memory.

The processor may be adapted to executing the method for display at an interface of a multimedia information application according to an embodiment herein.

Refer to content of the method according to an embodiment for content of the device according to an embodiment, which is not repeated here.

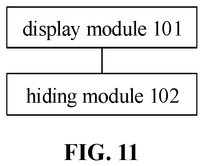

FIG. 11 is a diagram of a device for display at an interface of a multimedia information application according to an exemplary embodiment. Referring to FIG. 11, according to an optional embodiment, the device further includes a display module and a hiding module.

The display module 101 is adapted to, in response to detecting a first operation on a first control on an interface of a multimedia information application, displaying a second control on the interface.

The hiding module 102 is adapted to, in response to detecting a hiding trigger event, hiding the second control on the interface.

The interface may include a playing page. Multimedia information may be played in the playing page. A first region of the playing page may be adapted to displaying text content. The text content may be associated with multimedia information being played. The text content may be subject to dynamic switch.

The display module 101 may be adapted to displaying the second control in a second region of the playing page. The second region may be a region on the playing page other than the first region. The second region may be part of the first region.

The playing page may be an audio playing page.

The first region may be a middle region of the playing page.

The second region may be a corner region of the playing page. The corner region may be located outside the middle region.

The interface may include a navigation page. The navigation page may include a display region and a toolbar. At least one or more identifiers that identify multimedia information may be displayed in the display region. The toolbar may be located at the bottom of the display region. The first control may be located at a predetermined location on the toolbar,

The display module 101 may be adapted to displaying at least one second control in the display region around the predetermined location.

The device may further include an adjusting module.

The adjusting module 103 may be adapted to, while multimedia information is being played, dynamically adjusting a parameter for displaying the first control according to a circumstance of playing the multimedia information.

The circumstance of playing the multimedia information may include at least one of: a progress in playing the multimedia information being played, a tone of an audio being played, or a circumstance of switching between distinct multimedia information.

The parameter may include at least one of: a color in which the first control is displayed, a brightness with which the first control is displayed, a form in which the first control is displayed, or an area over which the first control is displayed.

The hiding module 102 may be adapted to, in response to detecting that the second control has been displayed for longer than a preset duration threshold, hiding the second control on the interface. The hiding module may be adapted to, in response to detecting a second operation on the first control, hiding the second control on the interface. The hiding module may be adapted to, in response to detecting that an operation on the second control completes, hiding the second control on the interface.

The hiding module 102 may be adapted to, in response to detecting a third operation on at least one second control, hiding the second control on the interface.

A module of the device according to an embodiment herein may execute an operation in a mode elaborated in at least one embodiment of the method herein, which will not be repeated here.

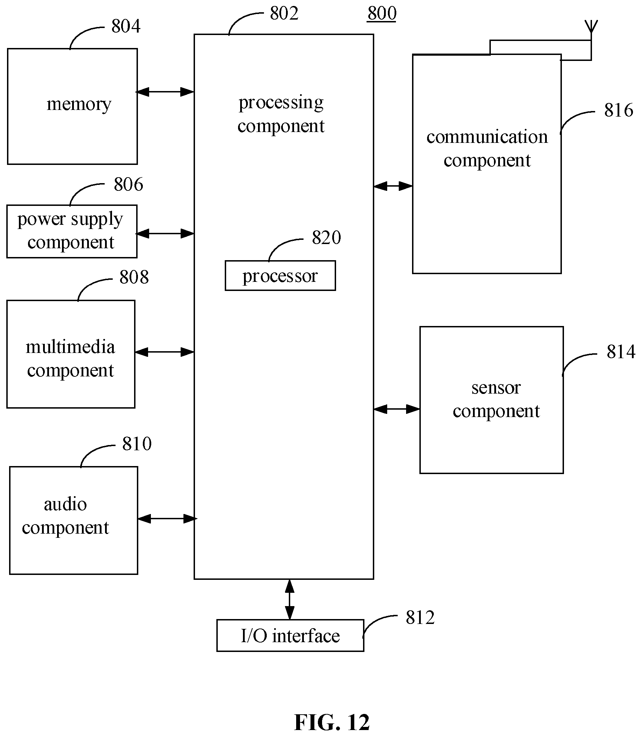

FIG. 12 is a block diagram of UE according to an exemplary embodiment. For example, the device 800 may be a phone, a computer, etc.

Referring to FIG. 12, the device 800 includes a processing component 802 and memory 804. The device 800 may include one or more of a power supply component 806, a multimedia component 808, an audio component 810, an Input / Output (I/O) interface 812, a sensor component 814, a communication component 816, etc.

The processing component 802 may generally control an overall operation of the device 800, such as operations associated with display, a telephone call, data communication, a camera operation, a recording operation, etc. The processing component 802 includes one or more processors 820 to execute instructions, so as to complete all or some steps of the method. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is adapted to storing various types of data to support the operation at the equipment 800. Examples of such data include instructions of any application or method adapted to operating on the device 800, contact data, phone book data, messages, pictures, videos, etc. The memory 804 may be realized by any type of transitory or non-transitory storage equipment or combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, or a compact disk.

The power supply component 806 may supply electric power to various components of the device 800. The power supply component 806 may include a power management system, one or more power sources, and other components related to generating, managing and distributing electricity for the device 800.

The multimedia component 808 may include a screen providing an output interface between the device 800 and a user. The screen may include a Liquid Crystal Display (LCD), a Touch Panel (TP), etc. If the screen includes a TP, the screen may be realized as a touch screen to receive an input signal from a user. The TP may include one or more touch sensors for sensing touch, slide and gestures on the TP. The touch sensors not only may sense the boundary of a touch or slide move, but also detect the duration and pressure related to the touch or slide move. The multimedia component 808 may include a front camera and/or a rear camera. When the device 800 is in an operation mode such as a photographing mode or a video mode, the front camera and/or the rear camera may receive external multimedia data. Each of the front camera or the rear camera may be a fixed optical lens system or may have a focal length and be capable of optical zooming.

The audio component 810 may be adapted to outputting and/or inputting an audio signal. For example, the audio component 810 may include a microphone (MIC). When the device 800 is in an operation mode such as a call mode, a recording mode, and a voice recognition mode, the MIC may be adapted to receiving an external audio signal. The received audio signal may be further stored in the memory 804 or may be sent via the communication component 816. The audio component 810 may further include a loudspeaker adapted to outputting the audio signal.

The I/O interface 812 may provide an interface between the processing component 802 and a peripheral interface module. Such a peripheral interface module may be a keypad, a click wheel, a button, and/or the like. Such a button may include but is not limited to: a homepage button, a volume button, a start button, and a lock button.

The sensor component 814 may include one or more sensors for assessing various states of the device 800. For example, the sensor component 814 may detect an on/off state of the device 800 and relative positioning of components such as the display and the keypad of the device 800. The sensor component 814 may further detect a change in the position of the device 800 or of a component of the deice 800, whether there is contact between the device 800 and a user, the orientation or acceleration/deceleration of the device 800, a change in the temperature of the device 800. The sensor component 814 may include a proximity sensor adapted to detecting existence of a nearby object without physical contact. The sensor component 814 may further include an optical sensor such as a Complementary Metal-Oxide-Semiconductor (CMOS) or a Charge-Coupled-Device (CCD) image sensor used in an imaging application. The sensor component 814 may further include an acceleration sensor, a gyroscope sensor, a magnetic sensor, a pressure sensor, or a temperature sensor.

The communication component 816 may be adapted to facilitating wired or wireless communication between the device 800 and other equipment. The device 800 may access a wireless network based on a communication standard such as Wi-Fi, 2G, 3G..., or combination thereof. The communication component 816 may broadcast related information or receive a broadcast signal from an external broadcast management system via a broadcast channel. The communication component 816 may further include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

The device 800 may be realized by one or more electronic components such as an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement the method.

In an exemplary embodiment, a non-transitory computer-readable storage medium including instructions, such as memory 804 including instructions, may be provided. The instructions may be executed by the processor 820 of the device 800 to implement the method. The non-transitory computer-readable storage medium may be Read-Only Memory (ROM), Random Access Memory (RAM), Compact Disc Read-Only Memory (CD-ROM), a magnetic tape, a floppy disk, optical data storage equipment, and/or the like.

In an exemplary embodiment, there is also provided a non-transitory computer-readable storage medium including an instruction, such as the memory 804 including an instruction, and the instruction may be executed by the processor 820 of the equipment 800 to implement the abovementioned method. For example, the non-transitory computer-readable storage medium may be a ROM, a Random Access Memory (RAM), a Compact Disc Read-Only Memory (CD-ROM), a magnetic tape, a floppy disc, an optical data storage equipment and the like.

In an exemplary embodiment, the device 800 may be implemented by one or more Application Specific Integrated Circuits (ASICs), Digital Signal Processors (DSPs), Digital Signal Processing Equipment (DSPDs), Programmable Logic Equipment (PLDs), Field Programmable Gate Arrays (FPGAs), controllers, micro-controllers, microprocessors or other electronic components, and is adapted to execute the abovementioned method.

A non-transitory computer-readable storage medium has stored thereon instructions which, when executed by a processor of User Equipment (UE), allow the UE to execute a control method. The method includes:
in response to detecting a first operation on a first control on an interface of a multimedia information application, displaying a second control on the interface; and
in response to detecting a hiding trigger event, hiding the second control on the interface.

Other embodiments of the present disclosure will be apparent to one skilled in the art after he/she has considered the subject disclosure and practiced the invention disclosed herein. The subject application is intended to cover any variation, use, or adaptation of the subject disclosure following the general principle of the subject disclosure and including such departures from the subject disclosure as come within known or customary practice in the art. The subject disclosure and its embodiments are intended to be exemplary only, with a true scope of the subject disclosure being indicated by the appended claims.

The subject disclosure is not limited to the exact construction that has been described above and illustrated in the accompanying drawings. Various modifications and changes can be made without departing from the scope of the subject disclosure. It is intended that the scope of the subject disclosure be limited only by the appended claims.

## Claims

1. A method for display at an interface of a multimedia information application, comprising:
in response to detecting a first operation on a first control (A) on the interface of the multimedia information application, displaying a second control (B) on the interface (S11);
in response to detecting a hiding trigger event, hiding the second control (B) on the interface (S12); and
while multimedia information is being played, dynamically adjusting a parameter for displaying the first control (A) according to a circumstance of playing the multimedia information,
wherein the parameter comprises at least one of: a color in which the first control (A) is displayed, or a brightness with which the first control (A) is displayed,
wherein the circumstance of playing the multimedia information comprises at least one of: a progress in playing the multimedia information being played, or a tone of an audio being played, and
wherein the interface comprises a navigation page and a playing page,
**characterized in that** the first operation comprises an operation with at least one of a pressing strength greater than a preset strength threshold or a pressing duration longer than a preset duration,
wherein the method further comprises:
on the navigation page, in response to an operation on the first control (A) with at least one of a pressing strength less than the preset strength threshold or a pressing duration shorter than the preset duration, playing the multimedia information on the playing page; and
on the playing page where the multimedia information is played, in response to the operation on the first control (A) with at least one of the pressing strength less than the preset strength threshold or the pressing duration shorter than the preset duration, switching content displayed on the playing page,
wherein the second control (B) comprises multiple second controls (B),
wherein displaying the second control (B) comprises displaying the multiple second controls (B) separately around the first control (A),
wherein the first control (A) and the multiple second controls (B) are separated from each other by a distance less than a distance threshold, with a relation between locations of two controls being fixed with respect to each other.

2. The method of claim 1,
wherein a first region (S4) of the playing page is adapted to displaying text content,
wherein the text content is associated with the multimedia information being played,
wherein the text content is subject to dynamic switch,
wherein displaying the second control (B) on the interface comprises:
displaying the second control (B) in a second region (S5) of the playing page, wherein the second region (S5) is a region on the playing page other than the first region (S4), or is part of the first region (S4).

3. The method of claim 2,
wherein the playing page is an audio playing page,
wherein the first region (S4) is a middle region of the playing page,
wherein the second region (S5) is a corner region of the playing page,
wherein the corner region is located outside the middle region.

4. The method of claim 1,
wherein the navigation page comprises a display region (S2) and a toolbar (S1),
wherein at least one or more identifiers that identify the multimedia information are displayed in the display region (S2),
wherein the toolbar (S1) is located at a bottom of the display region (S2),
wherein the first control (A) is located at a predetermined location on the toolbar (S1),
wherein displaying the second control (B) on the interface comprises:
displaying the second control (B) in the display region (S2) around the predetermined location.

5. The method of claim 1, wherein the in response to detecting the hiding trigger event, hiding the second control (B) on the interface comprises:
in response to detecting that the second control (B) has been displayed for longer than a preset duration threshold, hiding the second control (B) on the interface;
in response to detecting a second operation on the first control (A), hiding the second control (B) on the interface; and
in response to detecting that an operation on the second control (B) completes, hiding the second control (B) on the interface.

6. The method of claim 5, wherein the in response to detecting that the operation on the second control (B) completes, hiding the second control (B) on the interface comprises:
in response to detecting a third operation on at least one second control (B), hiding the second control (B) on the interface.

7. User Equipment, UE (800), comprising a processor (820) and memory (804) storing an instruction executable by the processor (820), wherein the processor (820) is adapted to:
in response to detecting a first operation on a first control (A) on the interface of the multimedia information application, displaying a second control (B) on the interface;
in response to detecting a hiding trigger event, hiding the second control (B) on the interface; and
while multimedia information is being played, dynamically adjusting a parameter for displaying the first control (A) according to a circumstance of playing the multimedia information,
wherein the parameter comprises at least one of: a color in which the first control (A) is displayed, or a brightness with which the first control (A) is displayed,
wherein the circumstance of playing the multimedia information comprises at least one of:
a progress in playing the multimedia information being played, or a tone of an audio being played, and
wherein the interface comprises a navigation page and a playing page,
**characterized in that** the first operation comprises an operation with at least one of a pressing strength greater than a preset strength threshold or a pressing duration longer than a preset duration,
wherein the processor (820) is further adapted to:
on the navigation page, in response to an operation on the first control (A) with at least one of a pressing strength less than the preset strength threshold or a pressing duration shorter than the preset duration, playing the multimedia information on the playing page; and
on the playing page where the multimedia information is played, in response to the operation on the first control (A) with at least one of the pressing strength less than the preset strength threshold or the pressing duration shorter than the preset duration, switching content displayed on the playing page,
wherein the second control (B) comprises multiple second controls (B),
wherein the processor (820) is adapted to displaying the multiple second controls (B) separately around the first control (A),
wherein the first control (A) and the multiple second controls (B) are separated from each other by a distance less than a distance threshold, with a relation between locations of two controls being fixed with respect to each other.

8. The UE of claim 7,
wherein a first region (S4) of the playing page is adapted to displaying text content,
wherein the text content is associated with the multimedia information being played,
wherein the text content is subject to dynamic switch,
wherein the processor (820) is adapted to displaying the second control (B) in a second region (S5) of the playing page, wherein the second region (S5) is a region on the playing page other than the first region (S4), or is part of the first region (S4).

9. The UE of claim 7,
wherein the navigation page comprises a display region (S2) and a toolbar (S1),
wherein at least one or more identifiers that identify the multimedia information are displayed in the display region (S2),
wherein the toolbar (S1) is located at a bottom of the display region (S2),
wherein the first control (A) is located at a predetermined location on the toolbar (S1),
wherein the processor (820) is adapted to displaying the second control (B) in the display region (S2) around the predetermined location.

10. The UE of claim 7, wherein the processor (820) is adapted to,
in response to detecting that the second control (B) has been displayed for longer than a preset duration threshold, hiding the second control (B) on the interface;
in response to detecting a second operation on the first control (A), hiding the second control (B) on the interface; and
in response to detecting that an operation on the second control (B) completes, hiding the second control (B) on the interface.

11. A computer program comprising instructions for executing the method of any one of claims 1 through 6, when said program is executed by a computer.

12. A computer-readable storage medium, having stored thereon instructions which, when executed by a processor (820) of User Equipment, UE(800), allow the UE to execute the method of any one of claims 1 through 6.

## Patentansprüche

1. Verfahren zur Anzeige an einer Schnittstelle einer Multimedia-Informationsanwendung, das umfasst:
als Reaktion auf das Detektieren einer ersten Betätigung an einem ersten Bedienelement (A) auf der Schnittstelle der Multimedia-Informationsanwendung, Anzeigen eines zweiten Bedienelements (B) auf der Schnittstelle (S11);
als Reaktion auf das Detektieren eines versteckenden Auslöseereignisses, Verstecken des zweiten Bedienelements (B) auf der Schnittstelle (S12); und
während Multimedia-Informationen wiedergegeben werden, dynamisches Einstellen eines Parameters zur Anzeige des ersten Bedienelements (A) entsprechend einem Umstand der Wiedergabe der Multimedia-Informationen,
wobei der Parameter mindestens eines aus Folgendem umfasst: eine Farbe, in der das erste Bedienelement (A) angezeigt wird, oder eine Helligkeit, mit der das erste Bedienelement (A) angezeigt wird,
wobei der Umstand der Wiedergabe der Multimedia-Informationen mindestens eines aus Folgendem umfasst: einen Fortschritt bei der Wiedergabe der Multimedia-Informationen, die gerade wiedergegeben werden, oder einen Ton eines Audios, das wiedergegeben wird, und
wobei die Schnittstelle eine Navigationsseite und eine Wiedergabeseite aufweist, **dadurch gekennzeichnet, dass** die erste Betätigung eine Betätigung mit mindestens einem aus einer Drückkraft, die größer als ein voreingestellter Kraftschwellenwert ist, oder einer Drückdauer, die länger als eine voreingestellte Dauer ist, umfasst,
wobei das Verfahren ferner umfasst:
auf der Navigationsseite, als Reaktion auf eine Betätigung an einem ersten Bedienelement (A) mit mindestens einem aus einer Drückkraft, die geringer als ein voreingestellter Kraftschwellenwert ist, oder einer Drückdauer, die kürzer als die voreingestellte Dauer ist, Wiedergeben der Multimedia-Informationen auf der Wiedergabeseite; und
auf der Wiedergabeseite, auf der die Multimedia-Informationen wiedergegeben werden, als Reaktion auf die Betätigung an dem ersten Bedienelement (A) mit mindestens einem aus der Drückkraft, die geringer als der voreingestellte Kraftschwellenwert ist, oder der Drückdauer, die kürzer als die voreingestellte Dauer ist, Wechseln des Inhalts, der auf der Wiedergabeseite angezeigt wird,
wobei das zweite Bedienelement (B) mehrere zweite Bedienelemente (B) aufweist, wobei das Anzeigen des zweiten Bedienelements (B) das separate Anzeigen der mehreren zweiten Bedienelement (B) um das erste Bedienelement (A) herum umfasst, wobei das erste Bedienelement (A) und die mehreren zweiten Bedienelemente (B) in einen Abstand voneinander beabstandet sind, der geringer als ein Abstandsschwellenwert ist, wobei eine Beziehung zwischen Positionen von zwei Bedienelementen in Bezug zueinander festgelegt ist.

2. Verfahren nach Anspruch 1,
wobei ein erster Bereich (S4) der Wiedergabeseite zur Anzeige von Textinhalt dient, wobei der Textinhalt mit den Multimedia-Informationen zusammenhängt, die wiedergegeben werden,
wobei der Textinhalt dynamischen Wechseln unterliegt,
wobei das Anzeigen des zweiten Bedienelements (B) auf der Schnittstelle umfasst: Anzeigen des zweiten Bedienelements (B) in einem zweiten Bereich (S5) der Wiedergabeseite, wobei der zweite Bereich (S5) ein Bereich auf der Wiedergabeseite ist, der sich von dem ersten Bereich (S4) unterscheidet oder Teil des ersten Bereichs (S4) ist.

3. Verfahren nach Anspruch 2,
wobei die Wiedergabeseite eine Audio-Wiedergabeseite ist,
wobei der erste Bereich (S4) ein Mittelbereich der Wiedergabeseite ist,
wobei der zweite Bereich (S5) ein Eckbereich der Wiedergabeseite ist,
wobei sich der Eckbereich außerhalb des Mittelbereichs befindet.

4. Verfahren nach Anspruch 1,
wobei die Navigationsseite einen Anzeigebereich (S2) und eine Symbolleiste (S1) aufweist,
wobei mindestens eine oder mehrere Kennungen, welche die Multimedia-Informationen identifizieren, in dem Anzeigebereich (S2) angezeigt werden,
wobei sich die Symbolleiste (S1) in einem unteren Teil des Anzeigebereichs (S2) befindet,
wobei sich das erste Bedienelement (A) an einer vorbestimmten Position auf der Symbolleiste (S1) befindet,
wobei das Anzeigen des zweiten Bedienelements (B) auf der Schnittstelle umfasst: Anzeigen des zweiten Bedienelements (B) in dem Anzeigebereich (S2) um die vorbestimmte Position herum.

5. Verfahren nach Anspruch 1, wobei das Verstecken des zweiten Bedienelements (B) auf der Schnittstelle als Reaktion auf das Detektieren des versteckenden Auslöseereignisses umfasst:
als Reaktion auf das Detektieren, dass das zweite Bedienelement (B) länger als ein voreingestellter Dauerschwellenwert angezeigt wurde, Verstecken des zweiten Bedienelements (B) auf der Schnittstelle;
als Reaktion auf das Detektieren einer zweiten Betätigung an dem ersten Bedienelement (A), Verstecken des zweiten Bedienelements (B) auf der Schnittstelle; und
als Reaktion auf das Detektieren, dass eine Betätigung an dem zweiten Bedienelement (B) abgeschlossen ist, Verstecken des zweiten Bedienelements (B) auf der Schnittstelle.

6. Verfahren nach Anspruch 5, wobei das Verstecken des zweiten Bedienelements (B) auf der Schnittstelle als Reaktion auf das Detektieren, dass die Betätigung an dem zweiten Bedienelement (B) abgeschlossen ist, umfasst:
als Reaktion auf das Detektieren einer dritten Betätigung an mindestens einem zweiten Bedienelement (B), Verstecken des zweiten Bedienelements (B) auf der Schnittstelle.

7. Benutzerendgerät, UE (800), das einen Prozessor (820) und einen Speicher (804) aufweist, auf dem von dem Prozessor (820) ausführbare Anweisungen gespeichert sind, wobei der Prozessor (820) für Folgendes ausgebildet ist:
als Reaktion auf das Detektieren einer ersten Betätigung an einem ersten Bedienelement (A) auf der Schnittstelle der Multimedia-Informationsanwendung, Anzeigen eines zweiten Bedienelements (B) auf der Schnittstelle;
als Reaktion auf das Detektieren eines versteckenden Auslöseereignisses, Verstecken des zweiten Bedienelements (B) auf der Schnittstelle; und
während Multimedia-Informationen wiedergegeben werden, dynamisches Einstellen eines Parameters zur Anzeige des ersten Bedienelements (A) entsprechend einem Umstand der Wiedergabe der Multimedia-Informationen,
wobei der Parameter mindestens eines aus Folgendem umfasst: eine Farbe, in der das erste Bedienelement (A) angezeigt wird, oder eine Helligkeit, mit der das erste Bedienelement (A) angezeigt wird,
wobei der Umstand der Wiedergabe der Multimedia-Informationen mindestens eines aus Folgendem umfasst: einen Fortschritt bei der Wiedergabe der Multimedia-Informationen, die gerade wiedergegeben werden, oder einen Ton eines Audios, das wiedergegeben wird, und
wobei die Schnittstelle eine Navigationsseite und eine Wiedergabeseite aufweist, **dadurch gekennzeichnet, dass** die erste Betätigung eine Betätigung mit mindestens einem aus einer Drückkraft, die größer als ein voreingestellter Kraftschwellenwert ist, oder einer Drückdauer, die länger als eine voreingestellte Dauer ist, umfasst,
wobei der Prozessor (820) ferner für Folgendes ausgebildet ist:
auf der Navigationsseite, als Reaktion auf eine Betätigung an einem ersten Bedienelement (A) mit mindestens einem aus einer Drückkraft, die geringer als ein voreingestellter Kraftschwellenwert ist, oder einer Drückdauer, die kürzer als die voreingestellte Dauer ist, Wiedergeben der Multimedia-Informationen auf der Wiedergabeseite; und
auf der Wiedergabeseite, auf der die Multimedia-Informationen wiedergegeben werden, als Reaktion auf die Betätigung an dem ersten Bedienelement (A) mit mindestens einem aus der Drückkraft, die geringer als der voreingestellte Kraftschwellenwert ist, oder der Drückdauer, die kürzer als die voreingestellte Dauer ist, Wechseln des Inhalts, der auf der Wiedergabeseite angezeigt wird,
wobei das zweite Bedienelement (B) mehrere zweite Bedienelemente (B) aufweist, wobei der Prozessor (820) dazu ausgebildet ist, die mehreren zweiten Bedienelemente (B) separat um das erste Bedienelement (A) herum anzuzeigen,
wobei das erste Bedienelement (A) und die mehreren zweiten Bedienelemente (B) in einen Abstand voneinander beabstandet sind, der geringer als ein Abstandsschwellenwert ist, wobei eine Beziehung zwischen Positionen von zwei Bedienelementen in Bezug zueinander festgelegt ist.

8. UE nach Anspruch 7,
wobei ein erster Bereich (S4) der Wiedergabeseite zur Anzeige von Textinhalt dient, wobei der Textinhalt mit den Multimedia-Informationen zusammenhängt, die wiedergegeben werden,
wobei der Textinhalt dynamischen Wechseln unterliegt,
wobei der Prozessor (820) dazu ausgebildet ist, das zweite Bedienelement (B) in einem zweiten Bereich (S5) der Wiedergabeseite anzuzeigen, wobei der zweite Bereich (S5) ein Bereich auf der Wiedergabeseite ist, der sich von dem ersten Bereich (S4) unterscheidet oder Teil des ersten Bereichs (S4) ist.

9. UE nach Anspruch 7,
wobei die Navigationsseite einen Anzeigebereich (S2) und eine Symbolleiste (S1) aufweist,
wobei mindestens eine oder mehrere Kennungen, welche die Multimedia-Informationen identifizieren, in dem Anzeigebereich (S2) angezeigt werden,
wobei sich die Symbolleiste (S1) in einem unteren Teil des Anzeigebereichs (S2) befindet,
wobei sich das erste Bedienelement (A) an einer vorbestimmten Position auf der Symbolleiste (S1) befindet,
wobei der Prozessor (820) dazu ausgebildet ist, das zweite Bedienelement (B) in dem Anzeigebereich (S2) um die vorbestimmte Position herum anzuzeigen.

10. UE nach Anspruch 7, wobei der Prozessor (820) für Folgendes geeignet ist:
als Reaktion auf das Detektieren, dass das zweite Bedienelement (B) länger als ein voreingestellter Dauerschwellenwert angezeigt wurde, Verstecken des zweiten Bedienelements (B) auf der Schnittstelle;
als Reaktion auf das Detektieren einer zweiten Betätigung an dem ersten Bedienelement (A), Verstecken des zweiten Bedienelements (B) auf der Schnittstelle; und
als Reaktion auf das Detektieren, dass eine Betätigung an dem zweiten Bedienelement (B) abgeschlossen ist, Verstecken des zweiten Bedienelements (B) auf der Schnittstelle.

11. Computerprogramm, das Anweisungen zur Ausführung des Verfahrens nach einem der Ansprüche 1 bis 6 aufweist, wenn das Programm von einem Computer ausgeführt wird.

12. Computerlesbares Speichermedium, auf dem Anweisungen gespeichert sind, die bei Ausführung durch einen Prozessor (820) des Benutzerendgeräts, UE (800), ermöglichen, dass das UE das Verfahren nach einem der Ansprüche 1 bis 6 durchführt.

## Revendications

1. Procédé d'affichage sur une interface d'une application d'informations multimédia, comprenant :
en réponse à la détection d'une première opération sur une première commande (A) sur l'interface de l'application d'informations multimédia, l'affichage d'une seconde commande (B) sur l'interface (S11) ;
en réponse à la détection d'un événement déclencheur de masquage, le masquage de la seconde commande (B) sur l'interface (S12) ; et
pendant la lecture d'informations multimédias, l'ajustement dynamique d'un paramètre d'affichage de la première commande (A) en fonction des circonstances de la lecture des informations multimédias,
dans lequel le paramètre comprend au moins l'une parmi : une couleur dans laquelle la première commande (A) est affichée, ou une luminosité avec laquelle la première commande (A) est affichée,
dans lequel la circonstance de lecture des informations multimédia comprend au moins l'une parmi : une progression dans la lecture des informations multimédia en cours de lecture, ou une tonalité d'un son en cours de lecture, et
dans lequel l'interface comprend une page de navigation et une page de lecture,
**caractérisé en ce que** la première opération comprend une opération avec au moins l'une parmi : une force de pression supérieure à un seuil de force prédéfini ou une durée de pression supérieure à une durée prédéfinie,
dans lequel le procédé comprend en outre :
sur la page de navigation, en réponse à une opération sur la première commande (A) avec au moins l'une parmi : une force de pression inférieure au seuil de force prédéfini ou une durée de pression inférieure à la durée prédéfinie, lire les informations multimédias sur la page de lecture ; et
sur la page de lecture où les informations multimédia sont lues, en réponse à l'opération sur la première commande (A) avec au moins l'une parmi : la force de pression inférieure au seuil de force prédéfini ou la durée de pression inférieure à la durée prédéfinie, changer le contenu affiché sur la page de lecture,
dans lequel la seconde commande (B) comprend plusieurs secondes commandes (B),
dans lequel l'affichage de la seconde commande (B) consiste à afficher les multiples secondes commandes (B) séparément autour de la première commande (A),
dans lequel la première commande (A) et les multiples secondes commandes (B) sont séparées l'une de l'autre par une distance inférieure à un seuil de distance, la relation entre les emplacements de deux commandes étant fixe l'une par rapport à l'autre.

2. Procédé selon la revendication 1,
dans lequel une première zone (S4) de la page de lecture est adaptée à l'affichage d'un contenu textuel,
dans lequel le contenu textuel est associé aux informations multimédia en cours de lecture,
dans lequel le contenu du texte est sujet à la commutation dynamique,
dans lequel l'affichage de la seconde commande (B) sur l'interface comprend :
l'affichage de la seconde commande (B) dans une seconde zone (S5) de la page de lecture, dans lequel la seconde zone (S5) est une zone de la page de lecture autre que la première zone (S4) ou fait partie de la première zone (S4).

3. Procédé selon la revendication 2,
dans lequel la page de lecture est une page de lecture audio,
dans lequel la première zone (S4) est une zone centrale de la page de lecture,
dans lequel la seconde zone (S5) est une zone d'angle de la page de lecture,
dans lequel la zone d'angle est située à l'extérieur de la zone centrale.

4. Procédé selon la revendication 1,
dans lequel la page de navigation comprend une zone d'affichage (S2) et une barre d'outils (S1),
dans lequel au moins un ou plusieurs identificateurs qui permettent d'identifier les informations multimédias sont affichés dans la zone d'affichage (S2),
dans lequel la barre d'outils (S1) est située en bas de la zone d'affichage (S2), dans lequel la première commande (A) est située à un endroit prédéterminé de la barre d'outils (S1),
dans lequel l'affichage de la seconde commande (B) sur l'interface comprend :
l'affichage de la seconde commande (B) dans la zone d'affichage (S2) autour de l'emplacement prédéterminé.

5. Procédé selon la revendication 1, dans lequel, en réponse à la détection de l'événement déclencheur de masquage, le masquage de la seconde commande (B) sur l'interface comprend :
en réponse à la détection du fait que la seconde commande (B) a été affichée pendant plus longtemps qu'un seuil de durée prédéfini, le masquage de la seconde commande (B) sur l'interface ;
en réponse à la détection d'une deuxième opération sur la première commande (A), le masquage de la seconde commande (B) sur l'interface ; et
en réponse à la détection de la fin d'une opération sur la seconde commande (B), le masquage de la seconde commande (B) sur l'interface.

6. Procédé selon la revendication 5, dans lequel, en réponse à la détection de la fin de l'opération sur la seconde commande (B), le masquage de la seconde commande (B) sur l'interface comprend :
en réponse à la détection d'une troisième opération sur au moins une seconde commande (B), le masquage de la seconde commande (B) sur l'interface.

7. Équipement utilisateur, UE (800), comprenant un processeur (820) et une mémoire (804) stockant une instruction exécutable par le processeur (820), dans lequel le processeur (820) est adapté pour :
en réponse à la détection d'une première opération sur une première commande (A) sur l'interface de l'application des informations multimédia, afficher une seconde commande (B) sur l'interface ;
en réponse à la détection d'un événement déclencheur de masquage, masquer la seconde commande (B) sur l'interface ; et
pendant la lecture d'informations multimédias, l'ajustement dynamique d'un paramètre d'affichage de la première commande (A) en fonction des circonstances de la lecture des informations multimédias,
dans lequel le paramètre comprend au moins l'une parmi : une couleur dans laquelle la première commande (A) est affichée, ou une luminosité avec laquelle la première commande (A) est affichée,
dans lequel la circonstance de lecture des informations multimédia comprend au moins l'une parmi : une progression dans la lecture des informations multimédia en cours de lecture, ou une tonalité d'un son en cours de lecture, et
dans lequel l'interface comprend une page de navigation et une page de lecture,
**caractérisé en ce que** la première opération comprend une opération avec au moins l'une parmi : une force de pression supérieure à un seuil de force prédéfini ou une durée de pression supérieure à une durée prédéfinie,
dans lequel le processeur (820) est en outre adapté pour :
sur la page de navigation, en réponse à une opération sur la première commande (A) avec au moins l'une parmi : une force de pression inférieure au seuil de force prédéfini ou une durée de pression inférieure à la durée prédéfinie, lire les informations multimédias sur la page de lecture ; et
sur la page de lecture où les informations multimédia sont lues, en réponse à l'opération sur la première commande (A) avec au moins l'une parmi : la force de pression inférieure au seuil de force prédéfini ou la durée de pression inférieure à la durée prédéfinie, changer le contenu affiché sur la page de lecture,
dans lequel la seconde commande (B) comprend plusieurs secondes commandes (B),
dans lequel le processeur (820) est adapté pour afficher les multiples secondes commandes (B) séparément autour de la première commande (A),
dans lequel la première commande (A) et les multiples secondes commandes (B) sont séparées l'une de l'autre par une distance inférieure à un seuil de distance, la relation entre les emplacements de deux commandes étant fixe l'une par rapport à l'autre.

8. UE selon la revendication 7,
dans lequel une première zone (S4) de la page de lecture est adaptée à l'affichage d'un contenu textuel,
dans lequel le contenu textuel est associé aux informations multimédia en cours de lecture,
dans lequel le contenu du texte est sujet à la commutation dynamique,
dans lequel le processeur (820) est adapté pour afficher la seconde commande (B) dans une seconde zone (S5) de la page de lecture, dans lequel la seconde zone (S5) est une zone de la page de lecture autre que la première zone (S4) ou fait partie de la première zone (S4).

9. UE selon la revendication 7,
dans lequel la page de navigation comprend une zone d'affichage (S2) et une barre d'outils (S1),
dans lequel au moins un ou plusieurs identificateurs qui permettent d'identifier les informations multimédias sont affichés dans la zone d'affichage (S2),
dans lequel la barre d'outils (S1) est située en bas de la zone d'affichage (S2),
dans lequel la première commande (A) est située à un endroit prédéterminé de la barre d'outils (S1),
dans lequel le processeur (820) est adapté à l'affichage de la seconde commande (B) dans la zone d'affichage (S2) autour de l'emplacement prédéterminé.

10. UE selon la revendication 7, dans lequel le processeur (820) est adapté pour :
en réponse à la détection du fait que la seconde commande (B) a été affichée plus longtemps qu'un seuil de durée prédéfini, le masquage de la seconde commande (B) sur l'interface ;
en réponse à la détection d'une deuxième opération sur la première commande (A), le masquage de la seconde commande (B) sur l'interface ; et
en réponse à la détection de la fin d'une opération sur la seconde commande (B), le masquage de la seconde commande (B) sur l'interface.

11. Programme d'ordinateur comprenant des instructions permettant d'exécuter le procédé selon l'une quelconque des revendications 1 à 6, lorsque ledit programme est exécuté par un ordinateur.

12. Support de stockage lisible par ordinateur, sur lequel sont stockées des instructions informatiques qui, lorsqu'elles sont exécutées par un processeur (820) de l'équipement utilisateur, UE (800), permettent à l'UE d'exécuter le procédé selon l'une quelconque des revendications 1 à 6.
